# EUROPEAN PATENT SPECIFICATION

(11) **EP 4 263 646 B1**
(45) Date of publication and mention of the grant of the patent: **12.02.2025**
(21) Application number: 21824601.5
(22) Date of filing: 15.12.2021
(51) Int. Cl.: C08G 18/00, C08G 18/58, C08G 18/72, C08G 18/76

(54) **STABILIZED EPOXY-ISOCYANATE MIXTURES AND OXAZOLIDINONE CONTAINING POLYMERS OBTAINED THEREFROM**
STABILISIERTE EPOXY-ISOCYANATMISCHUNGEN UND OXAZOLIDINONE MIT DARAUS ERHALTENEN POLYMEREN
MÉLANGES D'ÉPOXY-ISOCYANATE STABILISÉS ET POLYMÈRES CONTENANT DE L'OXAZOLIDINONE OBTENUS À PARTIR DE CES MÉLANGES

(30) Priority: 21.12.2020 EP 20215903
(43) Date of publication of application: 25.10.2023
(73) Proprietor: BASF SE, 67056 Ludwigshafen am Rhein (DE)
(72) Inventor: KAMM, Andre, 49448 Lemfoerde (DE); WAGNER, Hendrik, 49448 Lemfoerde (DE); KLINKEBIEL, Arne, 49448 Lemfoerde (DE)
(74) Representative: BASF IP Association
(86) International application number: PCT/EP2021/085872
(87) International publication number: WO 2022/136048

(56) References cited:
- EP-A1- 3 604 370
- US-B2- 9 481 776

## Description

The present invention relates to a composition comprising a liquid, storage stable resin mixture comprising (a) polyisocyanates comprising at least one isomer of diphenylmethandiisocyanate or alternatively a mixture consisting of at least one isomer of diphenylmethandiisocyanate and at least one higher homologue of diphenylmethandiisocyanate, (b) at least one organic compound containing at least one epoxide groups and (c) at least one alkylating stabilizer (c1), selected from the group consisting of alkylating agents and at least one acid stabilizer (c2) selected from the group of carboxylic acid, carboxylic acid derivatives, mineral acids, carbonic acid derivatives, boronic acids, borate esters, at least one salt, selected of ammonium bromide, ammonium chloride and lithium chloride, silyl halides, silyl ethers and mixtures of two or more thereof . Further, the present invention relates to a method of producing molded articles, electrical insulating materials, coatings, adhesives, and foams, by adding a catalyst component comprising a catalyst for the isocyanate/epoxide reaction and, if necessary, auxiliary and additive materials. And producing molded articles, electrical insulating materials, coatings, adhesives, and foams produced by such a method.

Isocyanate based resin systems for the production of polyurethanes, used for example to generate molded articles or isocyanate-derived foam for the production of foams as polyurethane foams have been known for a long time and are often used in various applications and technologies. A great advantage of this class of compounds is that they can be produced by simply mixing two preformulated compositions, one isocyanate component comprising polyisocyanates and one isocyanate reactive component comprising isocyanate reactive compounds, often polyols and catalysts. Therefore, manufacturers for final products based on such isocyanate-based systems do not require a detailed knowledge in formulation.

However, a great challenge when using such kind of materials is temperature stability. Due to the reverse reaction at higher temperatures of the urethane group, such polyurethanes have a limited use at higher temperatures. To work around this problem, organic polyisocyanates can be reacted with epoxides. The principled reaction of polyisocyanates with epoxy compounds is known from the literature. It leads to oxazolidinones at elevated temperatures. This class of compounds is known for having excellent temperature stability. Unfortunately, the catalyst applied activates the epoxide as well as the isocyanate. Therefore, to work with two components as in polyurethanes chemistry, it is necessary that one component comprises polyisocyanates and epoxides, while the second component comprises catalysts and optionally additional compounds as for example polyols or solvents for the catalyst.

Several patents dealt with the production, processing and use of mixtures of polyisocyanates, epoxy compounds and/or polyurethanes. Thus, US 4118373 and DE 3600764 describe a process for producing resin systems containing a mixture of epoxy compounds and polyisocyanates. Furthermore, DE 3600764 discloses the general problem known to the skilled person that mixtures of epoxides and polyisocyanates have only conditional storage stability. Over time, liquid mixtures of these two substance classes show a strong increase in viscosity. This is disadvantageous from a practical point of view.

WO201280185 and WO2012150201 disclose a two-step reaction wherein in a first step the reaction between isocyanate and epoxides is stopped at an intermediate, highly viscous state by addition of alkoxylation agents. The reaction is then concluded in a second step by addition of additional catalyst and blowing agent to form a flame-retardant foam. Working with such high viscous intermediates is not desired.

To prevent an increase of viscosity of mixtures containing polyisocyanates and epoxy compounds, EP331996 suggests a process that allows the production of liquid, storage-stable resin mixtures from polyisocyanates and epoxy compounds. EP0331996 teaches that the use of inhibitory alkylation agents leads to storage-stable mixtures of these two substances. Furthermore, EP0331996 describes that the reaction retardants or stopper known from the isocyanate chemistry, such as acids and acid halides, do not lead to a permanent stabilization of such mix-tures. In examples 1,2 and 9, EP0331996 clearly shows that a mixture of monomeric methylene diphenyl diisocyanate (MDI) or a carbodiimide modified monomeric MDI in combination with an inhibitory alkylation agent and epoxy compound leads to storage-stable mixtures. Further, EP331996 discloses in example 10 a mixture of polymeric MDI, a polyepoxide compound and an alkylating agent. However, EP 0331996 does not disclose any information on the storage stability of such mixtures in this example. When repeating this example it has been found, that mixtures comprising polymeric MDI cannot be stabilized efficiently by a method as disclosed in EP331996.

Since polymer MDI is a very important building block for different polyurethane resin or foam systems, it was the object of the present invention to find a method that provides a liquid, storage-stable mixture containing polymer MDI and epoxy.

Surprisingly, this object has been solved by a liquid, storage stable resin mixture comprising (a) polyisocyanates comprising at least one isomer of diphenylmethandiisocyanate and at least one higher homologue of diphenylmethandiisocyanate, (b) at least one organic compound containing at least one epoxide groups and (c) at least one alkylating stabilizer (c1), selected from the group consisting of alkylating agents and at least one acid stabilizer (c2) selected from the group consisting of carboxylic acid, carboxylic acid derivatives, mineral acids, carbonic acid derivatives, boronic acids, borate esters, at least one salt, selected of ammonium bromide, ammonium chloride and lithium chloride, silyl halides, silyl ethers, and mixtures of two or more thereof

Further, the present invention relates to a method of producing molded articles, electrical insulating materials, coatings, adhesives, and foams, by adding a catalyst component comprising a catalyst for the isocyanate/epoxide reaction and, if necessary, auxiliary and additive materials. And producing molded articles, electrical insulating materials, coatings, adhesives, and foams produced by such a method.

According to the present invention, the storage stable resin mixture of the inventio is liquid at 25 °C. Liquid in this sense means that the viscosity, measured according to DIN 53015 is below 1000 Pa.s, preferably below 500 Pa.s and most preferably below 100 Pa.s.

Polyisocyanate (a) refers in the context of the present invention to any organic compound comprising two or more reactive isocyanate groups per molecule, i.e., the functionality is at least 2. When the polyisocyanates employed or a mixture of two or more polyisocyanates do not have a unitary functionality, the number-weighted average functionality of the employed component a) is at least 2. The average isocyanate functionality of polyisocyanates a) is preferably at least 2.2 and more preferably at least 2.4. The average functionality of component a) is more than 2, preferably in the range from 2.2 to 4, preferably in the range from 2.5 to 3.8 and more preferably in the range from 2.7 to 3.5.

The aliphatic, cycloaliphatic, araliphatic polyfunctional isocyanates known per se and preferably the aromatic polyfunctional isocyanates come into consideration for use as polyisocyanates a). Polyfunctional isocyanates of this type are known per se or are obtainable by methods known per se. Polyfunctional isocyanates may more particularly also be used as mixtures, in which case component a) will accordingly comprise various polyfunctional isocyanates. Polyfunctional isocyanates that come into consideration for use as polyisocyanate have two (hereinafter called diisocyanates) or more than two isocyanate groups per molecule.

Preferably aromatic polyisocyanates such as tolylene 2,4- and 2,6-diisocyanate and the corresponding isomer mixtures can be used.

It is essential for the invention that the polyisocyanate component comprises at least one isomer of diphenylmethandiisocyanate, such as 2,2'-diphenylmethandiisocyanate, 2,4'-diphenylmethandiisocyanate, 4,4'-diphenylmethandiisocyanate or mixtures of 2 or three of these isomers of diphenylmethandiisocyanate. In addition to the isomers of diphenylmethandiisocyanate, the polyisocyanate (a) comprises at least one higher homologue of diphenylmethandiisocyanate which include polynuclear condensation products of diphenylmethandiisocyanate of at least 3 aromatic nuclei and have an isocyanate functionality of at least 3, especially 3 or 4 or 5. Such mixtures of isomers and homologues of diphenylmethane are generally produced by condensation of aniline with formaldehyde and subsequent phosgenation (crude diphenylme-thanediisocyanate). Via distillation and re-blending of the obtained fractions of crude MDI various grades of MDI having different amounts of the individual isomers and the higher homologues can be obtained. These mixtures comprising higher homologues of MDI are often also referred to as polymeric MDI or polymer MDI. Polymeric MDI is often characterized by its viscosity at 25 °C. In a preferred embodiment according to the invention the viscosity of the blend is in the range of 50 mPas to 3.3500 mPs, preferably 80 mPas to 3000 mPas, more preferably 100 mPas to 2500, even more preferred 400 to 2300 and most preferred 500 to 800 mPas. According to the invention, isomers of diphenylmethane and higher homologues of diphenylmethane, alone as well as in mixtures, are often designated as MDI, mixtures comprising higher homologues as polymer-MDI. Further, according to the invention the term "polymeric MDI" or "polymer-MDI" refers to MDI comprising higher homologues of MDI.

Polyfunctional isocyanates or mixtures of two or more polyfunctional isocyanates based on MDI are known and are for example marketed by BASF under the name of Lupranat^{®} M20 or Lupranat^{®} M50.

The (average) functionality of a polyisocyanate comprising polymeric MDI can vary in the range from 2.2 to 4, more particularly from 2.5 to 3.8, more particularly from 2.7 to 3.5. Such a mixture of MDI-based polyfunctional isocyanates having different functionalities is especially the crude MDI obtained as intermediate in the production of MDI.

Polyisocyanate component (a) according to the invention preferably comprises at least 70, more preferably at least 90 and especially preferred 100 wt.%, based on the total weight of component (a), of higher homologues of MDI and one or more polyisocyanates selected from the group consisting of 2,2'-MDI, 2,4-MDI, 4,4'-MDI.

The epoxide-containing component (b) comprises any desired aliphatic, cycloaliphatic, aromatic and/or heterocyclic compounds including at least one epoxide group. The preferred epoxides useful as component b) have from 1 to 4, more preferably 2 to 4 and especially preferred 2 epoxide groups per molecule and preferably an epoxide equivalent weight of 90 to 500 g/eq, more preferred 140 to 220 g/eq.

Suitable epoxides are for example polyglycidyl ethers of polyhydric phenols, for example of py-rocatechol, resorcinol, hydroquinone, 4,4'-dihydroxydiphenylpropane (bisphenol A), of 4,4'-dihydroxy-3,3'-dimethyldiphenylmethane, of 4,4'-dihydroxydiphenylmethane (bisphenol F), 4,4'-dihydroxydiphenylcyclohexane, of 4,4'-dihydroxy-3,3'-dimethyldiphenylpropane, of 4,4'-dihydroxybiphenyl, from 4,4'-dihydroxydiphenyl sulfone (bisphenol S), of tris(4-hydroxyphenyl)-methane, the chlorination and bromination products of the aforementioned diphenols, of novolacs (i.e., from reaction products of mono- or polyhydric phenols and/or cresols with aldehydes, especially formaldehyde, in the presence of acidic catalysts in the equivalence ratio of less than 1:1), of diphenols obtained by esterifying 2 mol of the sodium salt of an aromatic oxycarboxylic acid with one mole of a dihaloalkane or of a dihalodialkyl ester (cf. British patent 1 017 612) or of polyphenols obtained by condensation of phenols and long-chain haloparaffins containing at least two halogen atoms (cf. GB patent 1 024 288). There may further be mentioned: polyepoxide compounds based on aromatic amines and epichlorohydrin, e.g., N-di(2,3-epoxypropyl)aniline, N,N'-dimethyl-N,N'-diepoxypropyl-4,4'-diaminodiphenylmethane, N,N-diepoxypropyl-4-aminophenyl glycidyl ether (cf. GB patents 772 830 and 816 923). Further possibilities are: glycidyl esters of polybasic aromatic, aliphatic and cycloaliphatic carboxylic acids, for example diglycidyl phthalate, diglycidyl isophthalate, diglycidyl terephthalate, diglycidyl adipate and glycidyl esters of reaction products of 1 mol of an aromatic or cycloaliphatic dicarboxylic anhydride and 1/2 mol of a diol or 1/n mol of a polyol having n hydroxyl groups or diglycidyl hexahydrophthalates, which may optionally be substituted with methyl groups.

Glycidyl ethers of polyhydric alcohols, for example of 1,4-butanediol (Araldite^{®} DY-D, Huntsman), 1,4-butenediol, glycerol, trimethylolpropane (Araldite^{®} DY-T/CH, Huntsman), pentaerythritol and polyethylene glycol can likewise be used. Also of interest are triglycidyl isocyanurate, N,N'-diepoxypropyloxyamide, polyglycidyl thioethers of polyhydric thiols, as for example bismer-captomethylbenzene, diglycidyltrimethylene trisulfone, polyglycidyl ethers based on hydantoins.

It is finally also possible to use epoxidation products of polyunsaturated compounds, such as vegetable oils and conversion products thereof. Epoxidation products of di- and polyolefins, such as butadiene, vinylcyclohexane, 1,5-cyclooctadiene, 1,5,9-cyclododecatriene, chain growth addition polymers and interpolymers which still contain double bonds, which can be epoixidized, for example based on polybutadiene, polyisoprene, butadiene-styrene interpolymers, divinylbenzene, dicyclopentadiene, unsaturated polyesters, also epoxidation products of olefins accessible via Diels-Alder addition and subsequent conversion into polyepoxides by epoxidation with peroxide-compounds or of compounds containing two cyclopentene or cyclohexene rings linked via bridging atoms or bridging atom groups can likewise be used.

Preference according to the present invention for use as component b) is given to the following polyepoxide compounds or mixtures thereof:
polyglycidyl ethers of polyhydric phenols, in particular of bisphenol A (Araldit^{®} GY250, Huntsman; Ruetapox^{®} 0162, Bakelite AG; Epikote^{®} Resin 162, Hexion Specialty Chemicals GmbH; Eurepox 710, Brenntag GmbH;Araldit^{®} GY250, Hunstman, D.E.R.^{™} 332, The Dow Chemical Company; Epilox^{®} A 18-00, LEUNA-Harze GmbH) or bisphenol F (4,4'-dihydroxydiphenylmethane, Araldit^{®} GY281, Huntsman; Epilox^{®} F 16-01, LEUNA-Harze GmbH; Epilox^{®} F 17-00, LEUNA-Harze GmbH), polyepoxy compounds based on aromatic amines, especially bis(N-epoxypropyl)aniline, N,N'-dimethyl-N,N'-diepoxypropyl-4,4'-diaminodiphenylmethane and N,N-diepoxypropyl-4-aminophenyl glycidyl ether; polyglycidyl esters of cycloaliphatic dicarboxylic acids, especially diglycidyl hexahydrophthalate and polyepoxides from the reaction product of n mol of hexahydrophthalic anhydride and 1 mol of a polyol having n hydroxyl groups (n = integer from 2-6), especially 3 mol of hexahydrophthalic anhydride and one mole of 1,1,1-trimethylolpropane; 3,4-epoxycyclohexylmethyl 3,4-epoxycyclohexanecarboxylate.

Polyglycidyl ethers of bisphenol A and bisphenol F and also of novolacs are very particularly preferable, in particular polyglycidyl ethers of bisphenol F.

Liquid polyepoxides or low-viscosity diepoxides, such as bis(N-epoxypropyl)aniline or vinylcyclohexane diepoxide can in special cases further reduce the viscosity of already liquid polyepoxides or transform solid polyepoxides into liquid mixtures.

Component b) is used preferably in an amount corresponding to an equivalent ratio of isocyanate groups to epoxide groups of 1.0:10 to 600:1, more preferred 1.1 : 1 to 500 : 1, more preferred 1.2:1 to 150:1 and especially preferred 1,3:1 to 50:1.

The stabilizers (c) comprise at least one alkylating stabilizer (c1) and at least one acid stabilizer (c2).

The alkylating stabilizer (c1) selected from the group consisting of alkylating agents. Suitable alkylating agents (c1) include essentially any alkylating esters of organic sulfonic acids, preferably those esters having a molecular weight from 50 to 600 g/mol, more preferred form 80 to 400 g/mol and most preferred from 110 to 250 g/mol. Such alkylating esters are capable of transferring the alkyl groups to suitably reactive sites in other molecules. Preferred alkylating agents (c1) contain transferable alkyl groups having preferably from 1 to 20 carbon atoms more preferred form 1 to 15 even more preferred from 1 to 10 and especially preferred from 1 to 4. For example, organic sulfonic acid alkyl esters such as aliphatic and aromatic sulfonic acid alkyl esters can be used. Suitable aliphatic sulfonic acid alkyl esters include butanesulfonic acid methyl ester, n-perfluorobutanesulfonic acid methyl ester, and hexanesulfonic acid ethyl ester. Suitable aromatic sulfonic acid alkyl esters include benzenesulfonic acid methyl ester, ethyl ester, or butyl ester, p-toluenesulfonic acid methyl ester, ethyl ester, or butyl ester, 1-naphthalenesulfonic acid methyl ester, 3-nitrobenzenesulfonic acid methyl ester, and 2-naphthalenesulfonic acid methyl ester. Alkyl halides, such as methyl iodide or ethyl iodide, dimethyl sulfate, benzenesulfonyl chloride, benzenesulfonyl anhydride, silyl sulfonates, such as trimethylsilyl trifluoromethanesulfonate, benzylic halides, such as benzyl chlorides, allylic halides, such as allyl idodide, anhydrides, carboxylic acid halides and carbonate as well formiate halides, such as diethylene glycol-bis chloroformiate may also be used as component (c1). In a preferred embodiment the alkylating stabilizer (c1) is selected from the group, consisting of organic sulfonic acid alkyl esters, alkyl halides, dimethylsulfate and mixtures thereof. Especially preferred as component (c1) are the aromatic sulfonic acid esters and in particular p-toluenesulfonic acid methyl ester

The alkylating stabilizer (c1) is preferably used in quantities of from 0.0005 to 5% by weight, preferably from 0.001 to 2%, more preferably from 0.002 to 1% and most preferred from 0.005 to 0.3% by weight, based on the total weight of components (a) and (b). Component (c1) may be added to the multicomponent system in the pure form or, for example, as a solution in component (a).

The acid stabilizer (c2) are selected from the group consisting of carboxylic acid, carboxylic acid derivatives, mineral acids, carbonic acid derivatives, boronic acids, borate esters, at least one salt, selected of ammonium bromide, ammonium chloride and lithium chloride, silyl halides, silyl ethers, and mixtures of two or more thereof. Preferred carboxylic acids include monocarboxylic acids (e.g. formic acid, acetic acid, propionic acid), hydroxy carboxylic acids, amino acids, keto acids (e.g., pyruvic acid, acetoacetic acid), aromatic carboxylic acids (e.g., benzoic acid, phenyl acetic acid, hydrocinnamoyl chloride), dicarboxylic acids (e.g. malonic acid, malic acid, succinic acid, glutaric acid, adipic acid, maleic acid, fumaric acid, phthalic acid, etc.) and polycarboxylic acid. Preferred derivatives of carboxylic acids are carboxylic acid halides (e.g. acetyl chloride, acetyl bromide, propionyl chloride, propionyl bromide, butyryl chloride, isobutyryl chloride, succinyl chloride, valeroyl chlorid 3,3,3-trifluoropropionyl chloride, chloro acetyl chloride, methoxyacetyl chloride, phenylacetyl chloride, 4-methoxy benzoyl chloride, dimethylcarbamyl chloride, perfluorobutyryl chloride, cyclopropanecarbonyl chloride, acetoxyacetyl chloride, malonyl chloride, oxydiethylenbis(chlorformate) and diglycolyl chloride. Preferred mineral acids are hydrochloric acid, nitric acid, phosphoric acid, phosphonic acid, sulphuric acid, sulfonic acid, boric acid, hydrofluoric acid, hydrobromic acid, perchloric acid and/or hydroiodic acid. Preferred carbonic acids and carbonic acid derivatives are haloformates (e.g. methyl carbonate, ethyl carbonate, propylene carbonate, methyl chloroformate, methyl bromoformatete, ethyl chloroformate, ethyl bromoformate, 2-Fluoroethyl chloroformate) and/or thiocarbonates. Preferred boronic acids are boric acid, meta boric acid, tetraboric acid, pinacoboric acid, mannitoboric acid and glyceroboric acid. Preferred boronic esters are trimethyl borate, triethylborate, pinacomoethyl borate, and glyceromethyl borate. Preferred silyl halides are tetrachlorosilane, dichlorodimethylsilane and trichloromethylsilane. Prefferred silyl ethers are tetramethylsilane, tetraethylsilane, tetrapropylsilane and tetraisopropylsilane. In an especially preferred embodiment, the acid stabilizer (c2) is selected from the group, consisting of Phosphoric acid and a carboxylic acid halide such as Oxydiethylenbis(chlorformate), especially preferred is Oxydiethylenbis(chlorformate) as acid stabilizer (c2).

The acid stabilizer (c2) is preferably used in quantities of from 0.001 to 1% by weight, preferably from 0.005 to 0.3% by weight, based on the total weight of components (a) and (b). Component (c2) may be added to the multicomponent system in the pure form or, for example, as a solution in component (b) or as a solution in a respective solvent, for example water or ethyleneglycol.

The liquid, storage stable resin mixture may further comprise auxiliary and additive materials (d). Alternative, auxiliary and additive materials (d), if used, may be added to the catalyst component or may be added separately, for example in a separate stream. In a further alternative, auxiliary and additive materials (d) may be added to both, the liquid storage stable resin mixture as well as the catalyst component. Preferably no compounds comprising isocyanate reactive groups are added to the liquid storage stable resin mixture.

Additive materials d) used may be, for example, poetherols, polyesterols, polyetheresterols polyamines, polyetheramines, blowing agents (chemical and/or physical blowing agents), cross linker, chain extender, catalysts, fillers, surface-active substances such as emulsifiers, foam stabilizers and cell regulators, flame retardents, mold release agents, and also known UV stabilizers and hydrolysis inhibitors.

Polyols comprise compounds which have at least 2, more particularly 2 to 8 and preferably 2 to 3 alcoholic hydroxyl groups and a molecular weight of 62 to 8000 g/mol. Such compounds are known per se as a synthesis component for polyurethane and comprise low molecular mass chain extenders and polyols with number-average molecular weights of greater than 200 g/mol. Examples of chain extenders are simple polyhydric alcohols such as ethylene glycol, hexa-1,6-diol, glycerol or trimethylolpropane; examples of polyols are polyols containing dimethylsiloxane units, e.g., bis(dimethylhydroxymethylsilyl) ether; polyhydroxyl compounds containing ester groups, such as castor oil, for example, or polyhydroxy polyesters, of the kind obtainable by polycondensation of excess amounts of simple polyhydric alcohols of the type just exemplified with preferably dibasic carboxylic acids and/or their hydrides such as, for example, adipic acid, phthalic acid or phthalic anhydride; polyhydroxyl polyethers of the kind obtainable by addition of alkylene oxides such as propylene oxide and/or ethylene oxide onto suitable starter molecules such as water, for example, the simple alcohols just stated, or else amines having at least two aminic NH bonds; or polycarbonate polyols, which may be obtained, for example, from polyhydric alcohols and carbonates or phosgene.

Polyamines which can be used are compounds having at least two isocyanates-reactive hydrogen atoms, of which at least one belongs to a primary or secondary amino group. They comprise polyetheramines and compounds with molecular weights of less than 500 g/mol. Polyetheramines are known from polyurethane chemistry and may be obtained by terminal amination of polyether polyols. They preferably have molecular weights of 500 to 8000 g/mol. The compounds preferably used with two amino groups and with molecular weights of less than 500 g/mol more preferably have a molecular weight of 58 to 300 g/mol and more particularly of 100 to 200 g/mol. The isocyanate-reactive groups of these compounds are preferably two primary amino groups. In one particularly preferred embodiment, the primary amino groups are bonded to aromatic carbon atoms, preferably to an aromatic 6-membered ring, more particularly in metha- or para-position.

Employed with preference are less than 20 wt.-%, more preferably less than 10 wt.-%, of polyols and/or polyamines, and more particularly no polyols and/or polyamines. Where polyols and/or polyamines are used, this is done preferably in amounts such that the ratio of isocyanate groups in the polyisocyanates (a) to isocyanate-reactive compounds of component (d) is greater than 1.5:1, preferably greater than 5:1 and more particularly greater than 10:1.

Blowing agents, which are used to produce the foams of the invention, include chemical blowing agents, such as water, formic acid and mixtures thereof. Further to formic acid and water, a chemical blowing agent suitable is phospholine oxide. These agents react with isocyanate groups to form carbon dioxide and, in the case of formic acid, to form carbon dioxide and carbon monoxide. Because these blowing agents release the gas through a chemical reaction with the isocyanate groups, they are referred to as chemical blowing agents. It is also possible for physical blowing agents to be used, such as low-boiling hydrocarbons. Particularly suitable are liquids which are inert toward the polyisocyanates a) and have boiling points below 100°C, preferably below 50°C, under atmospheric pressure, so that they evaporate under the influence of the exothermic polyaddition reaction. Examples of such liquids used with preference are alkanes, such as heptane, hexane, n- and isopentane, preferably technical mixtures of n- and isopentanes, n- and isobutane and propane, cycloalkanes, such as cyclopentane and/or cyclohexane, ethers, such as furan, dimethyl ether and diethyl ether, ketones, such as acetone and methyl ethyl ketone, alkyl esters of carboxylic acids, such as methyl formate, dimethyl oxalate and ethyl acetate, and halogenated hydrocarbons are selected from the group, but not limited to, consisting of cis- or trans-1,3,3,3-tetrafluoroprop-1-ene, 1,1,1-trifluoro-2-chloroprop-1-ene, 1-chloro-3,3,3-trifluoroprop-1-ene, 1-chloro-2,3,3,3-tetrafluoroprop-1-ene, in cis or trans form, 1,1,1,2,3-pentafluoroprop-1-ene, in cis or trans form, 1,1,1,4,4,4-hexafluorobut-2-ene, 1-bromopentafluoroprop-1-ene, 2-bromopentafluoroprop-1-ene, 3-bromopentafluoroprop-1-ene, 1,1,2,3,3,4,4-heptafluoro-1-butene, 3,3,4,4,5,5,5-heptafluoro-1-pentene, 1-bromo-2,3,3,3-tetrafluoroprop-1-ene, 2-bromo-1,3,3,3-tetrafluoroprop-1-ene, 3-bromo-1,1,3,3-tetrafluoroprop-1-ene, 2-bromo-3,3,3-trifluoroprop-1-ene, (E)-1-bromo-3,3,3-trifluoroprop-1-ene, 3,3,3-trifluoro-2-(trifluoromethyl)prop-1-ene, 1-chloro-3,3,3-trifluoroprop-1-ene, 2-chloro-3,3,3-trifluoroprop-1-ene, 1,1,1-trifluoro-2-butene and mix-tures thereof. Mixtures of these low-boiling liquids with one another and/or with other substituted or unsubstituted hydrocarbons may also be used. The physical blowing agents are preferably soluble in the component (b).

Preferred for use as chemical blowing agents are water, formic acid/water mixtures or formic acid, and particularly preferred chemical blowing agents are formic acid-water mixtures or formic acid. Preferred for use as physical blowing agents are pentane isomers, or mixtures of pentane isomers. In one particularly preferred embodiment, less than 5 wt.-%, preferably less than 2 wt.-%, more preferably less than 0.5 wt.-% and more particularly less than 0.1 wt.-% of blowing agent is used, based in each case on the total weight of components (a) to (d).

Further auxiliary and additive agents (d) for optional accompanying use are, for example, fillers such as, for example, finely ground quartz, chalk, Microdol, aluminum oxide, silicon carbide, graphite or corundum; pigments such as, for example, titanium dioxide, iron oxide or organic pigments such as phthalocyanine pigments; plasticizers such as, for example, dioctyl phthalate, tributyl phosphate or triphenyl phosphate; incorporable compatibilizers such as methacrylic acid, β-hydroxypropyl ester, maleic esters and fumaric esters; substances enhancing flame retardan-cy, such as red phosphorus or magnesium oxide; soluble dyes or reinforcing materials such as, for example, glass fibers or glass fabrics. Likewise suitable are C fibers and C-fiber fabrics and other organic polymer fibers such as, for example, aramid fibers or LC polymer fibers (LC = "liquid crystal"). Also contemplated as fillers are metallic fillers, such as aluminum, copper, iron and/or steel. The metallic fillers are used more particularly in granular form and/or powder form.

The auxiliary and additive agents (d) may also, furthermore, comprise known foam stabilizers of the polyethersiloxane type, mold release agents, e.g., polyamide waxes and/or stearic acid derivatives and/or natural wax, an example being carnauba wax, and also known UV stabilizers and hydrolysis inhibitors.

Catalysts to be used in the catalyst component have a pronounced catalyzing effect on the reaction of the compound containing at least one epoxide groups (b) with the polyisocyanates (a). Examples for suitable catalysts are customary amine catalyts as also known for production of polyurethanes. Examples include amidines, such as 2,3-dimethyl-3,4,5,6-tetrahydropyrimidine, tertiary amines, such as triethylamine, tributylamine, triethylenediamine, dimethylcyclohexyla-mine, dimethyloctylamine, N,N-dimethylbenzylamine, N-methylmorpholine, N-ethylmorpholine, N-cyclohexylmorpholine, N,N,N',N'-tetramethylethylenediamine, N,N,N',N'-tetramethylbutanediamine, N,N,N',N'-tetramethylhexanediamine, pentamethyldiethylenetriamine, tetramethyldiaminoethyl ether, bis(N,N-dimethylaminoethyl) ether, bis(dimethylaminopropyl)urea, dimethylpiperazine, 1,2-dimethylimidazole, 1-azabicyclo(3,3,0)octane and preferably 1,4-diazabicyclo(2,2,2)octane. Also suitable are, for example, pentamethyldiethylenetriamine, N-methyl-N'-dimethylaminoethylpiperazine, N,N-diethylethanolamine and also silamorpholine, boron trichloride/tertiary amine adducts and also N-[3-(dimethylamino)propyl]formamide. Further catalysts preferably comprise boron trichloride/tertiary amine adducts, N,N-dimethylbenzylamine and/or N,N-methyldibenzylamine and/or boron trichloro(N,N-dimethyloctylamine).

In addition, these catalysts may comprise incorporable amine catalysts. These include at least one, preferably 1 to 8 and more preferably 1 to 2 isocyanate-reactive groups, such as primary amino groups, secondary amino groups, hydroxyl groups or urea groups. A distinction is made here between amides and amino groups in that, for the purposes of this invention, primary and secondary amides are not referred to as, respectively, primary and secondary amino groups. The incorporable amine catalysts preferably include primary amino groups, secondary amino groups and/or hydroxyl groups. The incorporable amine catalysts preferably include one or more tertiary amino groups as well as the isocyanate-reactive group(s), according to the present invention. Preferably, at least one of the tertiary amino groups of the incorporable catalysts bears at least two aliphatic hydrocarbyl moieties, preferably having 1 to 10 carbon atoms per moiety, more preferably having 1 to 6 carbon atoms per moiety. It is particularly preferable for the tertiary amino groups to bear two moieties each independently selected from methyl, ethyl and any further organic moiety.

Catalysts are preferably employed in a concentration of 0.001 to 8 wt.-%, more preferably 0.6 to 6 wt.-%, further preferably 1.5 to 5 wt.-% and especially 2.1 to 5 wt.-% as catalyst or catalyst combination, based on the overall weight of components (a) and (b).

To obtain the liquid,stable composition according to the invention, starting materials (a), (b), and (c), as well as any optional auxiliary agents and additives (d), or a part thereof are mixed together simultaneously or successively. All of the components can be combined and heated within the temperature range of from 20 °C to 150 °C., preferably from 60 °C to 130 °C. Alternatively, an initial mixture containing at least components (b) and (c) can be prepared and then heated, with the remaining components being subsequently added.

Catalysts and, optionally, any other auxiliary agents and additives are added to the intermediate products for further processing, optionally after they have been dissolved in a suitable solvent. If the resins are to be worked up as solutions, either inert solvents, such as acetone, butyl acetate, methyl ethyl ketone, N-methylpyrrolidone, or mixtures thereof, or so-called reactive diluents may be used. The substances used as reactive diluents may be polyisocyanates of the type exemplified under (a) which are liquid at room temperature or polyepoxides of the type exemplified under (a) which are also liquid at room temperature.

In a method of producing molded articles, electrical insulating materials, coatings, adhesives, and foams, by adding a catalyst component comprising a catalyst for the isocyanate/epoxide reaction and, if necessary, auxiliary and additive materials (d). When adding the auxiliary and additive materials (d)

Molded articles, electrical insulating materials, coatings, adhesives, and foams, obtainable from a method as claimed in claim 10.

Curing of the mixtures takes place after the addition of catalysts, preferably at 20 °C to 150 °C. To obtain optimum properties, it is usually advisable to carry out an after-curing of the resulting plastics at temperatures from 50 °C to 250 °C., preferably from 200 °C to 230 °C.

The process according to the invention may also be carried out for the preparation of impregnating masses, for electrical insulations, or for glass fiber reinforced laminates. The process according to the invention is suitable for the production of electrical parts by the casting process, including production of, for example, printed circuits, electronic clocks, pocket calculators, electronic cameras, computers, micro-computers, and digital data stores.

The heat resistance of the products obtained by the process according to the invention, the low dielectric losses, the moisture resistance, and the abrasion resistance, as well as the processing properties in molds, are excellent. The process according to the invention is also suitable for the production of insulating materials of insulating classes H and C (JEC 85/Publication 84) in electric motors and generators, and for the production of construction materials for aircraft, rockets, or other apparatus subjected to severe stresses. Insulators, transformers, condensers, and laminates for the production of pipes, containers, or sports equipment may also be produced. The mixtures may also be used for the production of foams if they are processed in combination with suitable blowing agents.

The following examples section shall exemplify the present invention:

### Starting materials:

| | |
|---|---|
| ISO 1 | Lupranat M 20 S from BASF, Polymer-MDI with a NCO-content of 31,5 wt-% and a viscosity of210 mPas at 25°C |
| ISO 2 | Lupranat MI from BASF, a mixture of 2,4 & 4,4'-MDI with a NCO-content of 33,5 wt.-% and a viscosity of 12 mPas at 25°C |
| ISO 3 | Lupranat MP 102 from BASF, a prepolymer based on 4,4'-MDI and Polyetherols with a NCO-content of 22,9 wt.-% and a viscosity of 650 mPas at 25°C |
| Epoxy | Araldite GY 250 from Huntsman, Bisphenol-A-Epichlorohydrin Epoxy resin with an epoxy equivalent weight of 185 g/eq and a viscosity of 10 - 12 Pas |
| Stopper 1 | para-Toluolsulfonic acid methylester |
| Stopper 2 | Oxydiethylenbis(chlorformate) |
| Stopper 3 | Phosphoric acid, 85% in water |

The components were mixed at room temperature according to the following table and filled into several airtight sealed vessels. Immediately after mixing and filling, the viscosity was determined at 23°C and the remaining sealed vessels were stored at 50°C over the corresponding period. After a certain storage period, a corresponding vessel was removed and the viscosity was determined at 23°C.

| | V1 | | V2 | | V3 | | V4 | | V5 | |
|---|---|---|---|---|---|---|---|---|---|---|
| ISO 1 | | | | | | | 80,00 | | 79,90 | |
| ISO 2 | 80,00 | | | | | | | | | |
| ISO 3 | | | 80,00 | | 79,90 | | | | | |
| Epoxy | 20,00 | | 20,00 | | 20,00 | | 20,00 | | 20,00 | |
| Stopper 1 | | | | | 0,1 | | | | 0,1 | |
| Stopper 2 | | | | | | | | | | |
| Stopper 3 | | | | | | | | | | |
| | | | | | | | | | | |

| Storage time at 50°C | Viscositiy@ 25°C | Change | Viscositiy@ 25°C | Change | Viscositiy@ 25°C | Change | Viscositiy@ 25°C | Change | Viscositiy@ 25°C | Change |
|---|---|---|---|---|---|---|---|---|---|---|
| [Days] | [Pas] | [%] | [Pas] | [%] | [Pas] | [%] | [Pas] | [%] | [No] | [%] |
| 0 | 0,334 | 0 | 1,572 | 0 | 1,517 | 0 | 0,568 | 0 | 0,548 | 0 |
| 3 | 0,541 | 62 | n.m. | - | 2,404 | 58 | 25,93 | 4465 | 7,535 | 1275 |
| 7 | 0,564 | 92 | | | 2,405 | 58 | 213,8 | 37541 | 86,27 | 15642 |
| 14 | 0,666 | 99 | | | 2,781 | 83 | n.m. | - | n.m. | |
| 21 | 0,725 | 117 | | | 3,047 | 101 | | | | |
| | | | | | | | | | | |

| | | | | | | | | | | |
|---|---|---|---|---|---|---|---|---|---|---|
| n.m.: Viscosity > 1000 Pas or fixed | | | | | | | | | | |

As can be seen from the comparisons examples a mixutre of a polyexpoxide with a non polymeric MDI (example V1) showed a good storage stability while a mixture of a polyepoxide with polymeric MDI showed a fast and strong increase in viscosity over time (example V4). Also the addition of an alkylating agent showed no significant improvement in the mixture with polymeric MDI (V5). It could be shown, that a mixture of prepolymers based on monomeric MDI can be stabilized with an alkylating agent as indicated in V2 &V3. Surprisingly, the combination of the alkylating agent and the corresponding acid or acid chloride or chlorine formiate shows clear stabilization of the mixture. The viscosity of the mixtures in B1 & B2 stabilizes after a short time and shows no significant increase in viscosity.

| | V6 | | V7 | | B1 | | B2 | | B3 | |
|---|---|---|---|---|---|---|---|---|---|---|
| ISO 1 | 79,75 | | 79,75 | | 79,80 | | 79,50 | | 79,50 | |
| Epoxy | 20,00 | | 20,00 | | 20,00 | | 20,00 | | 20,00 | |
| Stopper 1 | | | 0,25 | | 0,1 | | 0,25 | | 0,25 | |
| Stopper 2 | 0,25 | | | | 0,1 | | 0,25 | | | |
| Stopper 3 | | | | | | | | | 0,25 | |
| | | | | | | | | | | |

| Storage time at 50°C | Viscositiy@ 25°C | Change | Viscositiy@ 25°C | Change | Viscositiy@ 25°C | Change | Viscositiy@ 25°C | Change | Viscositiy@ 25°C | Change |
|---|---|---|---|---|---|---|---|---|---|---|
| [Days] | [Pas] | [%] | [Pas] | [%] | [Pas] | [%] | [Pas] | [%] | [Pas] | [%] |
| 0 | 0,538 | 0 | 0,558 | 0 | 0,551 | 0 | 0,532 | 0 | 0,839 | 0 |
| 3 | 17,17 | 4465 | 6,775 | 1114 | 1,408 | 156 | 1,048 | 97 | 1,719 | 105 |
| 7 | n.m. | 37400 | 23,26 | 4068 | 2,147 | 290 | 0,941 | 76 | 1,446 | 72 |
| 14 | | Nm. | 541 | 96853 | 2,684 | 387 | 1,067 | 101 | 1,743 | 108 |
| 21 | | | n.m | - | 4,040 | 633 | 1,172 | 120 | 1,764 | 110 |
| | | | | | | | | | | |

| | | | | | | | | | | |
|---|---|---|---|---|---|---|---|---|---|---|
| n.m.: Viscosity > 1000 Pas or fixed | | | | | | | | | | |

As can be seen from examples V6 & V7, neither the use of an alkylating agent or an acid or acid chloride or chlorine formiate alone leads to a stabilization of the mixture of polymeric MDI and epoxy. Surprisingly, the combination of the alkylating agent and the corresponding acid or acid chloride or chlorine formiate shows clear stabilization of the mixture. The viscosity of the mixtures in B1 & B2 stabilizes after a short time and shows no significant increase in viscosity.

## Claims

1. A composition comprising a liquid, storage stable resin mixture comprising
(a) polyisocyanates comprising at least one isomer of diphenylmethandiisocyanate and at least one higher homologue of diphenylmethandiisocyanate,
(b) at least one organic compound containing at least one epoxide group and
(c) at least one alkylating stabilizer (c1), selected from the group consisting of alkylating agents and at least one acid stabilizer (c2) selected from the group consisting of carboxylic acid, carboxylic acid derivatives, mineral acids, carbonic acid derivatives, boronic acids, borate esters, at least one salt, selected of ammonium bromide, ammonium chloride and lithium chloride, silyl halides, silyl ethers and mixtures of two or more thereof .

2. A composition according to claim 1 **characterized in that** the polyisocyanates (a) are consisting of at least one isomer of diphenylmethandiisocyanate and at least one higher homologue of diphenylmethandiisocyanate.

3. A composition according to any of claims 1 or 2, wherein component (b) contains 2 to 4 epoxide groups per molecule and has an epoxide equivalent weight of from 90 to 500 g/eq.

4. A composition according to any of claims 1 to 3, wherein alkylating agent of stabilizer (c1) contains a transferable alkyl group having from 1 to 4 carbon atoms.

5. A composition according to any of claims 1 to 4, wherein stabilizer (c1) is selected from the group consisting of organic sulfonic acid alkyl ester, alkyl halide, and dimethyl sulfate.

6. A composition according to any of claims 1 to 5, wherein stabilizer (c2) is selected from the group consisting of phosphoric acid and carboxylic acid halides.

7. A composition according to any of claims 1 to 6, wherein stabilizer (c1) is used in a quantity of from 0.001 to 2% by weight, based on the total weight of components (a) and (b).

8. A composition according to any of claims 1 to 7, wherein stabilizer (c2) is used in a quantity of from 0.001 to 1% by weight, based on the total weight of components (a) and (b).

9. A composition according to any of claims 1 to 8, wherein component (b) is used in a quantity corresponding to an equivalent ratio of isocyanate groups of component (a) to epoxide groups of component (b) of from 1.0:10 to 500:1.

10. A method of producing molded articles, electrical insulating materials, coatings, adhesives, and foams, by adding a catalyst component comprising a catalyst for the isocyanate/epoxide reaction and, if necessary, auxiliary and additive materials (d) to a composition as claimed in any of claims 1 to 9.

11. Molded articles, electrical insulating materials, coatings, adhesives, and foams, obtainable from a method as claimed in claim 10.

## Patentansprüche

1. Zusammensetzung, umfassend eine flüssige lagerstabile Harzmischung, umfassend
(a) Polyisocyanate, umfassend mindestens ein Isomer von Diphenylmethandiisocyanat und mindestens ein höheres Homologes von Diphenylmethandiisocyanat,
(b) mindestens eine organische Verbindung, die mindestens eine Epoxidgruppe enthält, und
(c) mindestens einen Alkylierungsstabilisator (c1) ausgewählt aus der Gruppe bestehend aus Alkylierungsmitteln und mindestens einen Säurestabilisator (c2) ausgewählt aus der Gruppe bestehend aus Carbonsäure, Carbonsäurederivaten, Mineralsäuren, Kohlensäurederivaten, Boronsäuren, Boratestern, mindestens einem Salz ausgewählt aus Ammoniumbromid, Ammoniumchlorid und Lithiumchlorid, Silylhalogeniden, Silylethern und Mischungen von zwei oder mehr davon.

2. Zusammensetzung nach Anspruch 1, **dadurch gekennzeichnet, dass** die Polyisocyanate (a) aus mindestens einem Isomer von Diphenylmethandiisocyanat und mindestens einem höheren Homologen von Diphenylmethandiisocyanat bestehen.

3. Zusammensetzung nach einem der Ansprüche 1 oder 2, wobei Komponente (b) 2 bis 4 Epoxidgruppen pro Molekül enthält und ein Epoxidäquivalenzgewicht von 90 bis 500 g/Äq. hat.

4. Zusammensetzung nach einem der Ansprüche 1 bis 3, wobei Alkylierungsmittel des Stabilisators (c1) eine transferierbare Alkylgruppe mit 1 bis 4 Kohlenstoffatomen enthält.

5. Zusammensetzung nach einem der Ansprüche 1 bis 4, wobei Stabilisator (c1) ausgewählt ist aus der Gruppe bestehend aus organischem Sulfonsäurealkylester, Alkylhalogenid und Dimethylsulfat.

6. Zusammensetzung nach einem der Ansprüche 1 bis 5, wobei Stabilisator (c2) ausgewählt ist aus der Gruppe bestehend aus Phosphorsäure und Carbonsäurehalogeniden.

7. Zusammensetzung nach einem der Ansprüche 1 bis 6, wobei Stabilisator (c1) in einer Menge von 0,001 bis 2 Gew.% verwendet wird, bezogen auf das Gesamtgewicht der Komponenten (a) und (b).

8. Zusammensetzung nach einem der Ansprüche 1 bis 7, wobei Stabilisator (c2) in einer Menge von 0,001 bis 1 Gew.% verwendet wird, bezogen auf das Gesamtgewicht der Komponenten (a) und (b).

9. Zusammensetzung nach einem der Ansprüche 1 bis 8, wobei Komponente (b) in einer Menge entsprechend einem Äquivalenzverhältnis von Isocyanatgruppen von Komponente (a) zu Epoxidgruppen von Komponente (b) von 1,0:10 bis 500:1 verwendet wird.

10. Verfahren zur Herstellung von Formartikeln, elektrischen Isoliermaterialien, Beschichtungen, Klebstoffen und Schäumen, durch Zugeben einer Katalysatorkomponente, umfassend einen Katalysator für die Isocyanat/Epoxid-Reaktion, und, falls erforderlich, Hilfs- und Additivmaterialien (d) zu einer Zusammensetzung wie in einem der Ansprüche 1 bis 9 beansprucht.

11. Formartikel, elektrische Isoliermaterialien, Beschichtungen, Klebstoffe und Schäume, die nach einem Verfahren wie in Anspruch 10 beansprucht erhältlich sind.

## Revendications

1. Composition comprenant un mélange de résines stable au stockage, liquide, comprenant
(a) des polyisocyanates comprenant au moins un isomère de diisocyanate de diphénylméthane et au moins un homologue supérieur de diisocyanate de diphénylméthane,
(b) au moins un composé organique contenant au moins un groupe époxyde et
(c) au moins un stabilisant d'alkylation (c1), choisi dans le groupe constitué par des agents alkylants et au moins un stabilisant de type acide (c2) choisi dans le groupe constitué par un acide carboxylique, des dérivés d'acides carboxyliques, des acides minéraux, des dérivés d'acides carboniques, des acides boroniques, des esters de borate, au moins un sel, choisi parmi un bromure d'ammonium, un chlorure d'ammonium et le chlorure de lithium, des halogénures de silyle, des éthers de silyle et des mélanges de deux ou plus de ceux-ci.

2. Composition selon la revendication 1 **caractérisée en ce que** les polyisocyanates (a) sont constitués d'au moins un isomère de diisocyanate de diphénylméthane et d'au moins un homologue supérieur de diisocyanate de diphénylméthane.

3. Composition selon l'une quelconque des revendications 1 ou 2, le composant (b) contenant 2 à 4 groupes époxyde par molécule et possédant un poids d'équivalents d'époxyde allant de 90 à 500 g/éq.

4. Composition selon l'une quelconque des revendications 1 à 3, l'agent alkylant du stabilisant (c1) contenant un groupe alkyle transférable ayant de 1 à 4 atomes de carbone.

5. Composition selon l'une quelconque des revendications 1 à 4, le stabilisant (c1) étant choisi dans le groupe constitué par un ester d'alkyle d'acide sulfonique organique, un halogénure d'alkyle et le sulfate de diméthyle.

6. Composition selon l'une quelconque des revendications 1 à 5, le stabilisant (c2) étant choisi dans le groupe constitué par l'acide phosphorique et des halogénures d'acides carboxyliques.

7. Composition selon l'une quelconque des revendications 1 à 6, le stabilisant (c1) étant utilisé en une quantité allant de 0,001 à 2 % en poids, sur la base du poids total de composants (a) et (b).

8. Composition selon l'une quelconque des revendications 1 à 7, le stabilisant (c2) étant utilisé en une quantité allant de 0,001 à 1 % en poids, sur la base du poids total de composants (a) et (b).

9. Composition selon l'une quelconque des revendications 1 à 8, le composant (b) étant utilisé en une quantité correspondant à un rapport d'équivalents de groupes isocyanate du composant (a) sur groupes époxyde du composant (b) allant de 1,0 : 10 à 500 : 1.

10. Procédé de production d'articles moulés, de matériaux d'isolation électrique, de revêtements, d'adhésifs et de mousses, par ajout d'un composant catalyseur comprenant un catalyseur pour la réaction isocyanate/époxyde et, si nécessaire, des matières auxiliaires et additives (d) à une composition selon l'une quelconque des revendications 1 à 9.

11. Articles moulés, matériaux d'isolation électrique, revêtements, adhésifs et mousses, pouvant être obtenu(e)s par un procédé selon la revendication 10.
